# EUROPÄISCHE PATENTSCHRIFT

(11) **EP 1 427 505 B1**
(45) Veröffentlichungstag und Bekanntmachung des Hinweises auf die Patenterteilung: **21.06.2006**
(21) Anmeldenummer: 02798648.8
(22) Anmeldetag: 12.09.2002
(51) Int. Cl.: B01D 29/11, B01D 29/52, B01D 29/90

(54) **REGISTERABLAUF MIT PROFILROHREN FÜR ANSCHWEMMFILTER**
REGISTER DISCHARGE WITH PROFILED TUBES FOR PRECOAT FILTERS
EVACUATION DE REGISTRE AVEC DES TUBES PROFILES POUR FILTRE A PRECOUCHE

(30) Priorität: 18.09.2001 DE 20115391 U
(43) Veröffentlichungstag der Anmeldung: 16.06.2004
(73) Patentinhaber: KRONES Aktiengesellschaft, 93073 Neutraubling (DE)
(72) Erfinder: BANKE, Friedrich, 84416 Inning am Holz (DE); KAIN, Josef, 85417 Marzling (DE); HAHN, Adolf, 92726 Waidhaus (DE); FLOSSMANN, Rudolf, 85416 Langenbach (DE)
(74) Vertreter: Grünecker, Kinkeldey, Stockmair & Schwanhäusser Anwaltssozietät
(86) Internationale Anmeldenummer: PCT/EP2002/010258
(87) Internationale Veröffentlichungsnummer: WO 2003/024564

(56) Entgegenhaltungen:
- CH-A- 604 823
- US-A- 4 289 630
- US-A- 4 526 688
- US-A- 4 704 210

## Beschreibung

Die Erfindung betrifft einen Anschwemmfilter zur Filtration von Fluiden, insbesondere von Bier gemäß dem Oberbegriff des Anspruchs 1.

Ein solcher Anschwemmfilter ist beispielsweise bereits aus der US 4 526 688 bekannt. Auch hier sind Filterkerzen an einem Registerablauf befestigt. Die Filterkerzen weisen Innengewinde auf, in die Verbindungsplastikröhrchen eingeschraubt sind, die wiederum in eingeschweißte Teile in dem Ablaufrohr eingeschraubt werden. Die Ablaufrohre haben rechtwinkeligen Querschnitt.

Aus der Druckschrift CH 604 823 A ist eine Filterkerze bekannt, die über Anschlussstutzen in einem Ablaufrohr befestigt sind.

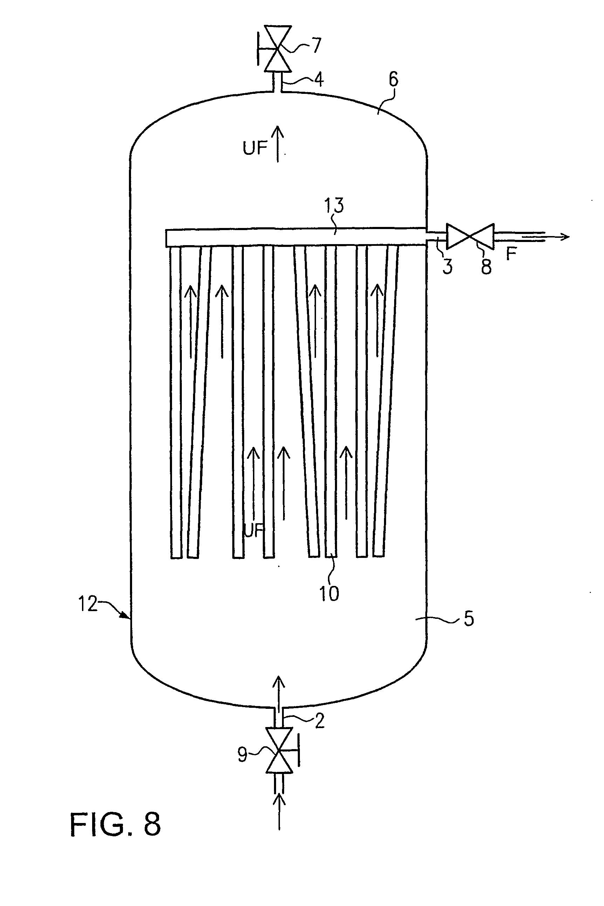

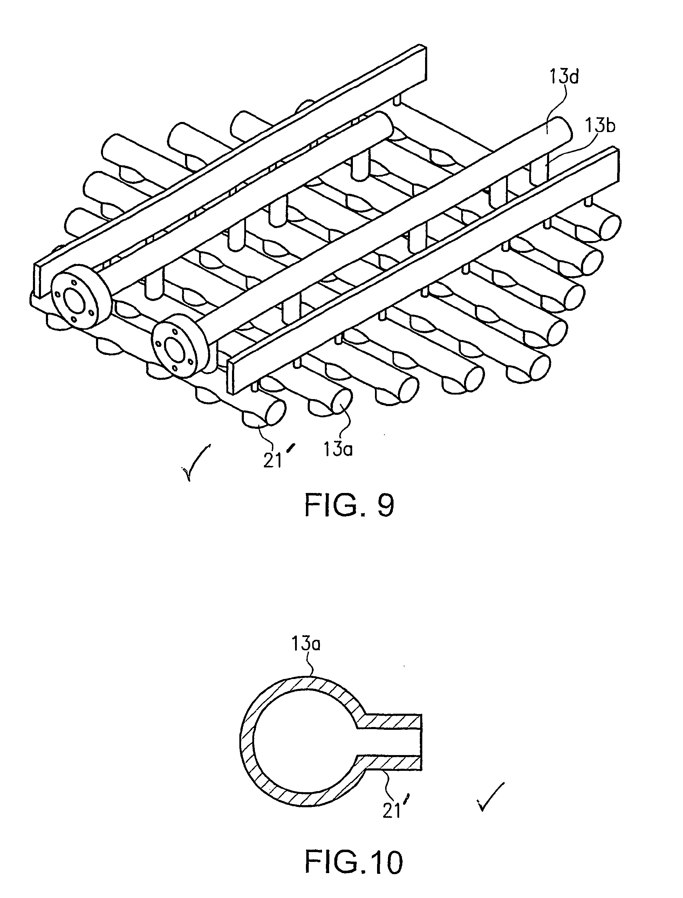

Es ist bekannt, zur gleichmäßigeren Anschwemmung von Filterkerzen einen Anschwemmfilter mit einem Registerablauf wie beispielsweise in Fig. 8 gezeigt ist, zu verwenden. Bei einem solchen Anschwemmfilter sind im Unfiltratraum 5 die Filterkerzen mit Ablaufleitungen 13 verbunden, so dass das Filtrat von den Filterkerzen 10 über die entsprechenden Ablaufleitungen 13 mindestens einem Ablauf 3 zugeführt werden kann. Dabei werden die Filterkerzen 10 über Anschlussstücke 21', die auf die Ablaufleitungen aufgeschweißt werden müssen, mit den Ablaufleitungen 13a verbunden. Es hat sich jedoch herausgestellt, dass sich bei der Verwirklichung des Registers herstellungstechnische Probleme ergeben, weil der Aufwand für die exakte Verschweißung der An-schlussstücke 21' auf den runden Ablaufleitungen enorm ist. Wie Fig. 9 und10 zeigen, müssen die Anschlussstücke 21' exakt auf die Rohre 13a aufgeschweißt werden und zwar so exakt, dass sich die angeschlossene Filterkerze dann parallel zur Längsachse des Filterkessels 12 erstreckt. Insbesondere bei größeren Filtern ergibt sich hier jedoch das Problem, dass es, wenn die Anschlussstücke 21' nicht exakt auf die Rohre 13 aufgesetzt werden, zu einem Winkelversatz und somit zu einer Schrägstellung der Filterkerzen, wie in Fig. 8 gezeigt ist, kommt. Eine derartige Schrägstellung der Filterkerzen 10 ist jedoch unerwünscht, da sich hier kein gleichmäßiger Unfiltratstrom ausbilden kann und es somit zu einer ungleichmäßigen Anschwemmung an die Filterkerzen kommt.

Hiervon ausgehend, liegt der vorliegenden Erfindung die Aufgabe zugrunde, einen Anschwemmfilter mit Registerablauf bereitzustellen, bei dem der Registerablauf einfach kostengünstig und exakt gefertigt werden kann.

Erfindungsgemäß wird diese Aufgabe durch einen Anschwemmfilter gemäß dem Anspruch 1 gelöst.

Gemäß der vorliegenden Erfindung können die Filterkerzen, ohne dass Anschlussstücke separat angeschweißt werden müssen, angebracht werden. Die Kerzen sind durch Einschrauben einfach zu montieren und zudem richtig ausgerichtet, weil es nicht zu einem verzugsbedingten Schrägstellen der Kerzen kommen kann. Somit ist eine parallele Ausrichtung der Filterkerzen gewährleistet. Zudem können die Filterkerzen einfach ausgetauscht werden.

Gemäß einem bevorzugten Ausführungsbeispiel umfassen die Ablaufleitungen in einer Ebene senkrecht zu den Filterkerzen parallel zueinander seitlich geschlossene Ablaufleitungen, in die die Filterkerzen münden, wobei jede der ersten Ablaufleitungen mit mindestens einer weiteren Ablaufleitung verbunden ist, die oberhalb der ersten Ablaufleitungen liegt, und die mit mindestens einem Ablauf verbunden ist. Bei einer derartigen Anordnung können auch die Ablaufleitungen, die oberhalb der Ablaufleitungen liegen, die mit den Filterkerzen verschraubt sind, auf der den Filterkerzen zugewandten Seite eine ebene Fläche aufweisen, um somit einfach mit den darunterliegenden Ablaufleitungen verbunden werden zu können. In vorteilhafter Weise weisen dann auch die unteren Ablaufleitungen, in die die Filterkerzen münden, auf der den Filterkerzen abgewandten Seite eine ebene Fläche auf.

Gemäß einer bevorzugten Ausführungsform weisen die Ablaufleitungen Profilrohre mit rechteckigem Querschnitt auf. Alternativ dazu können die Ablaufleitungen Rohre mit im Wesentlichen rundem Querschnitt sein, bei denen mindestens eine Seite zu einer ebenen Fläche abgeflacht wurde. Die verwendeten Rohre können entweder durch maschinelle Bearbeitung oder von Haus aus die ebene Fläche aufweisen.

Gemäß einem weiteren Ausführungsbeispiel besteht die Ablaufleitung aus einer Basis, die die ebene Fläche aufweist und einem an die Basis aufgesetzten im Querschnitt U-förmig gebogenem Blech. Die Erfindung wird nachfolgend anhand der folgenden Zeichnungen näher erläutert werden.
- Fig. 1: zeigt schematisch ein Längsschnitt eines Anschwemmfilters gemäß der vorliegenden Erfindung.
- Fig. 2: zeigt einen vergrößerten Ausschnitt der Ablaufleitungen, wie sie in Fig. 1 gezeigt sind.
- Fig. 3: zeigt einen Querschnitt durch die in Fig. 1 gezeigten Ablaufleitungen.
- Fig. 4: zeigt einen Längsschnitt durch eine Ablaufleitung gemäß einem bevorzugten Ausführungsbeispiel der vorliegenden Erfindung.
- Fig. 5: zeigt einen Längsschnitt durch eine Ablaufleitung gemäß einem weiteren Ausführungsbeispiel der vorliegenden Erfindung.
- Fig. 6: zeigt einen Längsschnitt durch eine Ablaufleitung gemäß einem weiteren Ausführungsbeispiel der vorliegenden Erfindung.
- Fig. 7: zeigt einen Längsschnitt durch eine Ablaufleitung gemäß einem weiteren Ausführungsbeispiel der vorliegenden Erfindung.
- Fig. 8: zeigt einen Anschwemmfilter gemäß dem Stand der Technik.
- Fig. 9: zeigt ein Registerablauf gemäß dem Stand der Technik.
- Fig. 10: zeigt einen Schnitt durch eine Ablaufleitung mit einem Anschlussstück gemäß dem Stand der Technik.

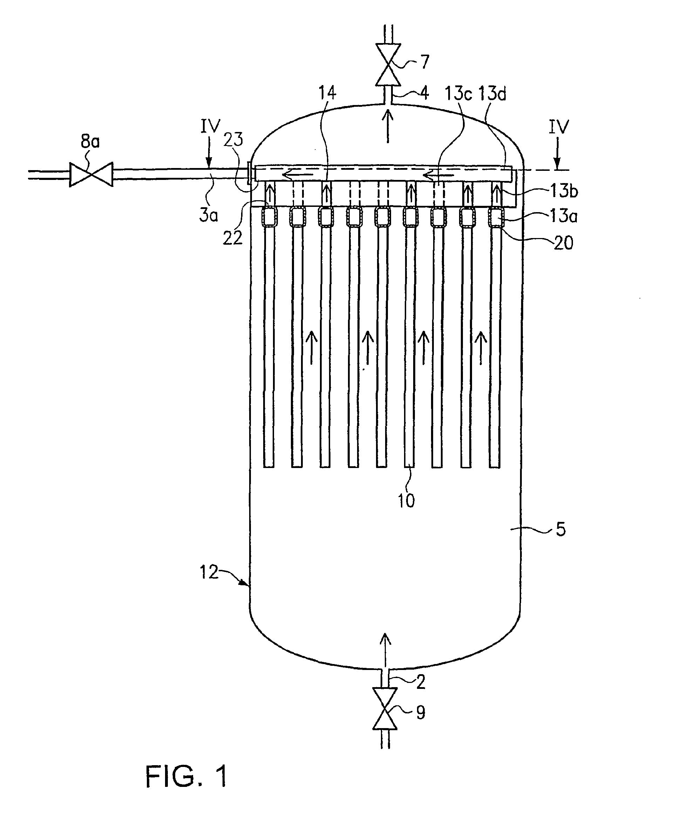

Wie aus Fig. 1 hervorgeht, umfasst der erfindungsgemäße Anschwemmfilter 1 einen Filterkessel 12 mit einem Zulauf 2 für Unfiltrat, z.B. Bier, dem Filterhilfsmittel zugesetzt wurde. Der Zulauf 2 ist z.B. mengenmäßig über dem Stellventil 9 oder aber über eine nichtdargestellte Pumpe regulierbar. Der Filterkessel 12 umfasst einen Unfiltratraum 5 in dem sich mehrere Filterkerzen 10 vertikal erstrecken. Des Weiteren ist ein Ablauf 4 für Unfiltrat mit einem Stellventil 7 versehen, wodurch ein Teil des Unfiltrats aus dem Filterkessel 12 ausgeleitet werden kann, um somit eine gezielte Unfiltratströmung zur besseren Anschwemmung des Unfiltrats an die Filterkerzen 10 zu erzielen. Das Unfiltrat, das über den Ablauf 4 abgeführt wurde, kann über eine nichtdargestellte Beipassleitung erneut dem Unfiltratraum 5 z.B. über den Zulauf 2 zugeführt werden.

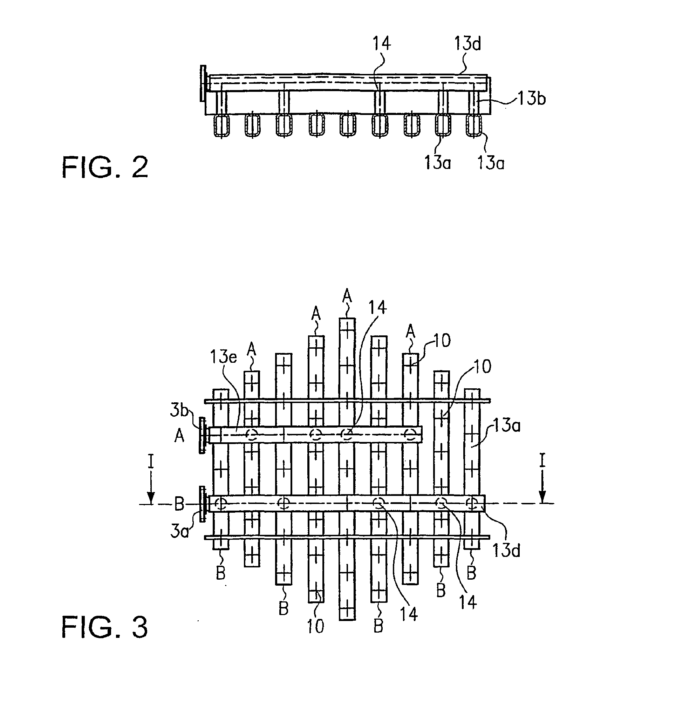

Die Filterkerzen sind hier in erste Rohrleitungen 13a eingeschraubt und werden von diesen getragen wie beispielsweise aus den Fig. 1 bis 3 hervorgeht, wobei Fig. 2 ein Schnitt entlang der Linie I-I der Fig. 3 ist. Wie aus den Figuren hervorgeht, sind die vertikal angeordneten Filterkerzen 10 gleichmäßig über den Querschnitt des Filterkessels 12 verteilt angeordnet. Die Rohrleitungen 13a liegen in einer Ebene senkerecht zu den Filterkerzen 10 parallel zueinander und sind seitlich verschlossen. Dabei haben die Rohrleitungen 13a, die in der Mitte liegen, eine größere Länge als die seitlich angeordneten Rohrleitungen 13a. Oberhalb der Rohrleitungen 13a erstrecken sich unter einem vorbestimmten Winkel, vorzugsweise 90° mindestens eine weitere Rohrleitung, die die Rohrleitungen 13a zusammenfassen. Bei diesem Ausführungsbeispiel gibt es zwei derartige Rohrleitungen 13e und 13d, die mit den Abläufen 3a und 3b verbunden sind. Die Rohrleitungen 13e und 13d weisen über ihre Gesamtlänge verteilt Verbindungsstellen 14 auf, die über Zwischenrohre 13b mit den unteren Rohren 13a verbunden sind. Bei diesem Ausführungsbeispiel werden also die Filterkerzen 10 über die Ablaufleitungen 13a-e in zwei Gruppen A und B zusammengefasst, so dass das Filtrat von den Filterkerzen 10 über die entsprechenden Ablaufleitungen 13a bis e den zwei Abläufen 3a und 3b zugeführt wird. Die Rohrleitungen 13a-e werden über Träger 15 an den Kesselwänden befestigt. Bei dieser Anordnung wird das Filtrat über die Ablaufleitungen 13a-e abgeleitet, so dass keine weitere Abtrennplatte zur Ausbildung eines Unfiltratraums notwendig ist.

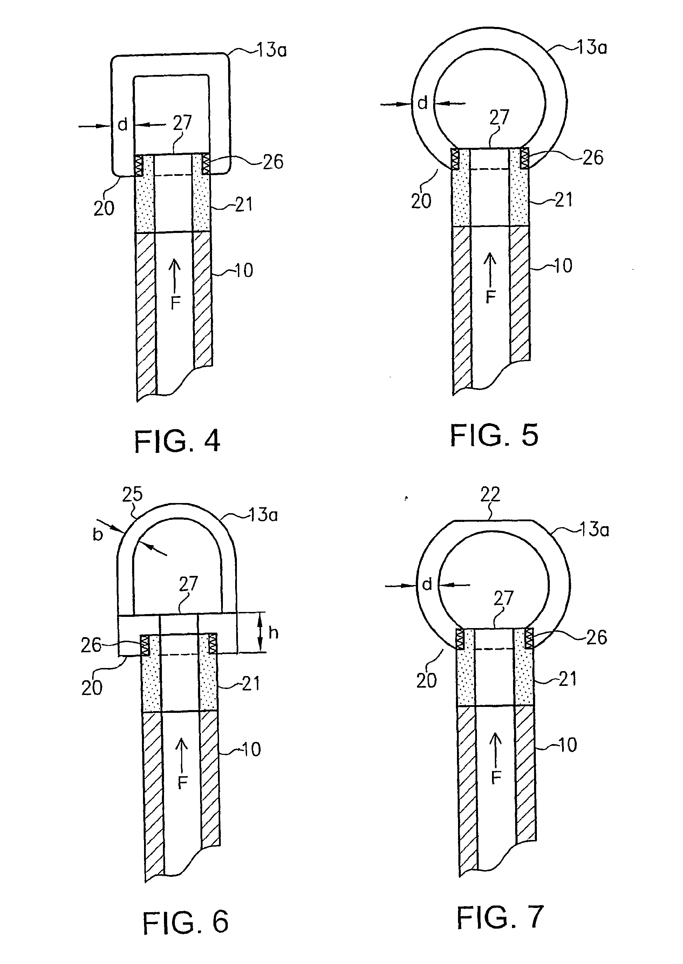

Gemäß der vorliegenden Erfindung weisen die Ablaufleitungen 13a auf der den Filterkerzen zugewandten Seiten eine ebene Fläche 20 auf in die eine Durchgangsöffnung gebildet ist, in die ein Gewinde geschnitten ist, wie beispielsweise aus Fig. 4 bis 7 hervorgeht, in das der Kopf 21 der Filterkerze 10, der ebenfalls ein Gewinde aufweist, eingeschraubt ist Die Wandstärke d der Ablaufleitungen 13 beträgt mindestens 6 mm, so dass die eingeschraubten Filterkerzen 10 ausreichend Halt haben.

Wie in Fig. 4 gezeigt ist, kann die Ablaufleitung 13a ein Profilrohr mit rechteckigen Querschnitt sein, in dessen Durchgangsöffnungen 27 auf der ebenen Fläche Innengewinde 26 geschnitten sind.

Die Fig. 5 zeigt eine weitere Ausführungsform einer Ablaufleitung 13a gemäß der vorliegenden Erfindung. Die Ablaufleitung 13a weist einen im Wesentlichen runden Querschnitt auf, wobei eine Seite als ebene Fläche 20 abgeflacht wurde. Auch hier ist in die Durchgangsöffnung auf der ebenen Fläche der Ablaufleitung 13a das Innengewinde 26 geschnitten.

Die in Fig. 7 gezeigte Ablaufleitung 13a weist im Wesentlichen die gleiche Form auf wie die in Fig. 5 gezeigte Ablaufleitung, wobei jedoch auch die der Filterkerze 10 gegenüberliegende Seite der Ablaufleitung als ebene Fläche 22 ausgebildet ist. Über diese ebene Fläche 22 kann dann die Ablaufleitung 13a beispielsweise mit einer darüberliegenden Ablaufleitung 13g (siehe Fig. 2) direkt oder über ein Zwischenrohr 13b verbunden werden. Dabei kann auch die Unterseite der Ablaufleitung 13d als ebene Fläche ausgebildet sein, was eine einfachere Verbindung ermöglicht.

Die Fig. 6 zeigt ein bevorzugtes Ausführungsbeispiel der vorliegenden Erfindung, die eine Basisplatte aufweist, die die ebene Fläche 20 aufweist. Auf die Basisplatte ist ein U-förmig gebogenes Blech 25 z.B. durch Verschweißen aufgesetzt, so dass sich eine Ablaufleitung 13a ergibt. Die Basisplatte weist eine Durchgangsöffnungen 27 auf , in die die Innengewinde 26 geschnitten sind. Die Basisplatte weist eine Höhe h von 4 bis 15 mm auf. Die Stärke b des U-förmig gebogenen Blechs liegt in einem Bereich zwischen 1 und 6 mm. Die in den Fig. 4, 5 und 7 gezeigten Profilrohre sind entweder bereits in dieser Form kommerziell erhältlich (Fig. 4) oder können einfach durch Abtragen einer Seite zu einer ebenen Fläche 20 hergestellt werden. Die kommerziell erhältlichen Rohre sind jedoch oft nicht lebensmitteltauglich. Das in Fig. 6 gezeigte Ausführungsbeispiel bringt den Vorteil mit sich, dass das Blech 25 bevor es gebogen wird, so vorbehandelt werden kann, dass es lebensmitteltauglich ist, und dann zusammen mit der Basis 24 zusammengefügt werden kann. Darüber hinaus kann bei dem in Fig. 6 gezeigten Ausführungsbeispiel die Höhe h der Basis variiert werden, so dass ein höherer Gewindegang 26 vorgesehen werden kann, wenn dies aus Stabilitätsgründen notwendig ist, wobei jedoch gleichzeitig die Stärke b des gebogenen Bleches 25 gering bleiben kann.

Wie aus den Fig. 4 bis 7 hervorgeht, wird in die Ablaufleitung 13a die Filterkerze 10, auf die ein Außengewinde geschnitten ist, eingeschraubt, so dass das Filtrat entlang den Pfeilen F durch die Öffnung 27, die in den Ablaufleitungen 13a gebildet ist, in die Ablaufleitungen 13a strömen kann. Als Material für die Rohrleitungen eignet sich vorzugsweise V2A.

## Patentansprüche

1. Anschwemmfilter zur Filtration von Bier mit einem Filterkessel (12), einem Filtratzulauf (2) und mit einem Unfiltratraum (5), in dem mehrere Filterkerzen (10) angeordnet sind, wobei die Filterkerzen (10) über Ablaufleitungen (13a-e) zusammengefasst werden, so dass das Filtrat von den Filterkerzen (10) über die entsprechenden Ablaufleitungen (13a-e) mindestens einem Ablauf (3a, 3b) zugeführt wird, wobei die Ablaufleitungen (13a) mindestens auf der den Filterkerzen zugewandten Seite eine ebene Fläche (20) mit Durchgangsöffnungen (27) aufweisen, **dadurch gekennzeichnet, dass**
in den Durchgangsöffnungen (27) direkt in die Ablaufleitungen (13a) Gewinde geschnitten sind, in die die Filterkerzen (10) geschraubt sind.

2. Anschwemmfilter nach Anspruch 1 , **dadurch gekennzeichnet, dass** die Ablaufleitungen in einer Ebene senkrecht zu den Filterkerzen (10) parallel zueinander liegende seitlich geschlossene erste Ablaufleitungen (13a) umfassen, in die die Filterkerzen (10) münden, wobei jede der ersten Ablaufleitungen (13a) mit mindestens einer weiteren Ablaufleitung (13d) verbunden ist, die oberhalb der ersten Ablaufleitungen (13a) liegt, und die mit mindestens einem Ablauf (3a-b) verbunden ist.

3. Anschwemmfilter nach Anspruch 2, **dadurch gekennzeichnet, dass** die Ablaufleitungen (13d) die oberhalb der Ablaufleitungen (13a), die mit den Filterkerzen (10) verbunden sind, auf der den Filterkerzen zugewandten Seite eine ebene Fläche (23) aufweisen.

4. Anschwemmfilter nach Anspruch 2, **dadurch gekennzeichnet, dass** die Ablaufleitungen (13a), die mit den Filterkerzen verbunden sind, auch auf der den Filterkerzen (10) abgewandten Seite (22) eine ebene Fläche aufweisen.

5. Anschwemmfilter nach mindestens einem der vorhergehenden Ansprüche, **dadurch gekennzeichnet, dass** die Ablaufleitungen (13a-e) Profilrohre mit rechteckigem Querschnitt sind.

6. Anschwemmfilter nach mindestens einem der Ansprüche 1 bis 4, **dadurch gekennzeichnet, dass** die Ablaufleitungen (13a-e) Rohre mit im Wesentlichen rundem Querschnitt sind, bei denen mindestens eine Seite zu einer ebenen Fläche abgeflacht wurde.

7. Anschwemmfilter nach mindestens einem der Ansprüche 1-4, **dadurch gekennzeichnet, dass** die Ablaufleitungen (13a) jeweils aus einer Basisplatte, die die ebene Fläche (20) aufweist und einem an die Basisplatte aufgesetzten im Querschnitt U-förmig gebogenem Blech (25) bestehen.

## Claims

1. A precoat filter for filtering beer, comprising a filter vessel (12), a filtrate inlet (2) and an unfiltrate chamber (5), in which a plurality of filter candles (10) are arranged, the filter candles (10) being combined via outlet lines (13a-e) so that the filtrate is supplied from the filter candles (10) via the corresponding outlet lines (13a-e) to at least one outlet (3a, 3b), the outlet lines (13a) having a flat surface (20) with passage openings (27) at least at the side facing the filter candles, **characterized in that**
threads into which the filter candles (10) are screwed are cut in the passage openings (27) directly into the outlet lines (13a).

2. The precoat filter according to claim 1, **characterized in that** in a plane perpendicular to the filter candles (10) the outlet lines comprise first outlet lines (13a) that are parallel with one another and laterally closed and into which the filter candles (10) terminate, each of the first outlet lines (13a) being connected to at least one further outlet line (13d) which is positioned above the first outlet lines (13a) and which is connected to at least one outlet (3a-b).

3. The precoat filter according to claim 2, **characterized in that** the outlet lines (13d) which are connected above the outlet lines (13a) to the filter candles (10) have a flat surface (23) at the side facing the filter candles.

4. The precoat filter according to claim 2, **characterized in that** the outlet lines (13a) which are connected to the filter candles also comprise a flat surface at the side (22) facing away from the filter candles (10).

5. The precoat filter according to at least one of the preceding claims, **characterized in that** the outlet lines (13a-e) are profiled tubes of a rectangular cross-section.

6. The precoat filter according to at least one of claims 1 to 4, **characterized in that** the outlet lines (13a-e) are tubes of a substantially round cross-section, in the case of which at least one side has been flattened to obtain a flat surface.

7. The precoat filter according to at least one of claims 1 to 4, **characterized in that** each of the outlet lines (13a) consists of a base plate which comprises the flat surface (20), and of a sheet metal (25) which is mounted on the base plate and, in cross section, is bent in the form of a U.

## Revendications

1. Filtre à précouche pour la filtration de bière comportant une cuve de filtration (12), une arrivée de produit filtré (2) et comportant une chambre de produit non filtré (5) dans laquelle sont disposées plusieurs bougies filtrantes (10), les bougies filtrantes (10) étant réunies par l'intermédiaire de conduites d'évacuation (13a-e), de telle façon qu'à partir des bougies filtrantes (10), le produit filtré est amené à au moins une évacuation (3a, 3b), par les conduites d'évacuation (13a-e) correspondantes, les conduites d'évacuation (13a) comportant, au moins sur le côté orienté vers les bougies filtrantes, une surface plane (20) présentant des ouvertures de passage (27), **caractérisé en ce que**
des filetages dans lesquels sont vissées les bougies filtrantes (10) sont réalisés dans les ouvertures de passage (27), directement dans les conduites d'évacuation (13a).

2. Filtre à précouche selon la revendication 1,
**caractérisé en ce que**, dans un plan perpendiculaire aux bougies filtrantes (10), les conduites d'évacuation comprennent des premières conduites d'évacuation (13a) fermées latéralement, situées parallèlement les unes aux autres, dans lesquelles débouchent les bougies filtrantes (10), chacune des premières conduites d'évacuation (13a) étant reliée à au moins une autre conduite d'évacuation (13d) qui se situe au-dessus des premières conduites d'évacuation (13a) et qui est reliée à au moins une évacuation (3a-b).

3. Filtre à précouche selon la revendication 2,
**caractérisé en ce que** les conduites d'évacuation (13d) au-dessus des conduites d'évacuation (13a), qui sont reliées aux bougies filtrantes (10), comportent une surface plane (23) sur le côté orienté vers les bougies filtrantes (10).

4. Filtre à précouche selon la revendication 2, **caractérisé en ce que** les conduites d'évacuation (13a) qui sont reliées aux bougies filtrantes (10), comportent une surface plane également sur le côté (22) détourné des bougies filtrantes (10).

5. Filtre à précouche selon l'une au moins des revendications précédentes, **caractérisé en ce que** les conduites d'évacuation (13a-e) sont des tubes profilés à section transversale carrée.

6. Filtre à précouche selon l'une au moins des revendications 1 à 4, **caractérisé en ce que** les conduites d'évacuation (13a-e) sont des tubes de section essentiellement ronde, dans lesquels au moins un côté a été aplati en une surface plane.

7. Filtre à précouche selon l'une au moins des revendications 1 à 4, **caractérisé en ce que** les conduites d'évacuation (13a) sont chacune constituées d'une plaque de base qui comporte la surface plane (20) et d'une tôle (25) à section transversale cintrée en U, posée sur la plaque de base.
